# EUROPEAN PATENT APPLICATION

(11) **EP 4 564 500 A1**
(43) Date of publication of application: **04.06.2025**
(21) Application number: 24212923.7
(22) Date of filing: 14.11.2024
(51) Int. Cl.: H01M 10/04, H01M 10/0587, H01M 50/528, H01M 50/533, H01M 50/538, H01M 50/559, H01M 50/566

(54) **CURRENT COLLECTING PLATE AND BATTERY UNIT COMPRISING CURRENT COLLECTING PLATE**

(30) Priority: 23.11.2023 CN 202311581686
(71) Applicant: Techtronic Cordless GP, Anderson, SC 29621 (US)
(72) Inventor: LI, Jin Wei, Guangdong Province (CN); GENG, Dan, Guangdong Province (CN)
(74) Representative: Novagraaf Group

(57) **Abstract**

The present invention relates to a current collecting plate for a positive electrode of a battery unit, the current collecting plate comprising: a first connecting portion, the first connecting portion being formed as a main body portion of the current collecting plate, and the first connecting portion being used for being welded to a positive electrode of a battery unit; a second connecting portion that is arranged in the middle of the main body portion; and a narrow portion that connects the first connecting portion and the second connecting portion, the narrow portion extending through a virtual center of the main body portion. During the manufacture of the battery unit, the current collecting plate is folded at the narrow portion, wherein the first connecting portion and the second connecting portion respectively have a first dimension that defines a first rated current, and the narrow portion has a second dimension that defines a second rated current which is smaller than the first rated current, and the second dimension is smaller than the first dimension.

## Description

### Technical field

The present invention belongs to the field of batteries, and more specifically the present invention relates to a current collecting plate and a battery unit comprising the current collecting plate.

### Background art

With the development of society, the battery has continuously developed quickly in terms of energy ratio, service life, etc., new energy devices with batteries, especially secondary batteries, as the energy storage apparatus have gradually become popular with consumers, and various types of batteries have gradually been applied on a large scale to various types of electronic devices. A battery that is internally provided with a cell acts as a representative of a small volume battery, has the characteristics of a small volume and being rechargeable, is widely used in various types of consumer-grade and industrial-grade electronic devices, and is able to significantly improve the experience of using electronic devices.

This type of secondary battery can be classified by shape as a cylindrical, prismatic or pouch-shaped secondary battery. Cylindrical secondary batteries have the advantages of high volume energy density, simple structure, easy assembly, convenient standardization, etc. With the development of technology, large cylindrical batteries have gradually become dominant in the market.

The cylindrical secondary battery typically comprises a cylindrical electrode assembly, a cylindrical can to which the electrode assembly is joined, an electrolyte injected into the can so that lithium ions can move, and a cover assembly joined to one side of the can to prevent electrolyte leakage and separation of the electrode assembly. In the present application, a single cylindrical secondary battery is also referred to as a battery unit.

Typical cylindrical secondary batteries, especially those without electrode plates, typically comprise a current collecting plate or a collector plate, which acts as a bridge component to provide an electrical connection between the electrode assembly and the corresponding battery terminal. For example, a positive electrode current collecting plate is generally welded between a cap or a first terminal of a battery unit and an electrode assembly. Since the size of the current collecting plate is smaller, when the current collecting plate is welded to the first terminal or cap, heat is easily conducted to a welding site between the current collecting plate and the electrode assembly, and also may cause a pressure imbalance which in turn leads to phenomena such as weak welds and over-welding, and thus may make it difficult to achieve a good weld between the current collecting plate and the electrode assembly and the battery terminal.

Therefore, the present field still needs a current collecting plate and a battery unit comprising the current collecting plate that can effectively mitigate the problem of poor welding caused by the current collecting plate, and thus improve the reliability of the battery unit.

### Summary of the invention

One of the purposes of the present application is to provide a current collecting plate and a battery unit comprising the current collecting plate that can effectively mitigate the problem of poor welding caused by the current collecting plate, and thus improve the reliability of the battery unit.

In order to solve the above technical problem, in a first aspect of the present application, a current collecting plate for a positive electrode of a battery unit is provided, characterized in that the current collecting plate comprises:
a first connecting portion, the first connecting portion being formed as a main body portion of the current collecting plate, and the first connecting portion being used for being welded to a positive electrode of a battery unit;
a second connecting portion that is arranged approximately at the center of the main body portion; and
a narrow portion that connects the first connecting portion and the second connecting portion, the narrow portion extending through a virtual center of the main body portion, and, during the manufacture of the battery unit, the current collecting plate being folded at the narrow portion, wherein the first connecting portion and the second connecting portion respectively have a first dimension that defines a first rated current, and the narrow portion has a second dimension that defines a second rated current which is smaller than the first rated current, and the second dimension is smaller than the first dimension.

In an embodiment of the first aspect of the present application, the current collecting plate is an integral member that is obtained by stamping a metal plate.

In an embodiment of the first aspect of the present application, the first connecting portion is constructed to be electrically connected to an electrode assembly of the battery unit, and the second connecting portion is constructed to be electrically connected to a cap of the battery unit.

In an embodiment of the first aspect of the present application, the current collecting plate is formed to be approximately in the shape of the letter "E", and comprises a vertical extension portion, and an upper transverse extension portion, a middle transverse extension portion and a lower transverse extension portion that extend transversely in the same direction from the vertical extension portion, and the middle transverse extension portion is longer than the upper transverse extension portion and the lower transverse extension portion.

In an embodiment of the first aspect of the present application, the vertical extension portion and the upper transverse extension portion and the lower transverse extension portion are formed as the first connecting portion, and the middle transverse extension portion is formed as the second connecting portion and the narrow portion.

In an embodiment of the first aspect of the present application, the middle transverse extension portion is formed as a transverse extension handle, and the narrow portion is narrower than the second connecting portion.

In an embodiment of the first aspect of the present application, the second connecting portion is formed to be approximately in the shape of a circle, and the second connecting portion is constructed to be welded at an outer periphery to a cap or a first terminal of the battery unit.

In an embodiment of the first aspect of the present application, a groove is formed between the upper transverse extension portion and the narrow portion, and a groove is formed between the lower transverse extension portion and the narrow portion.

In an embodiment of the first aspect of the present application, a width of the narrow portion is 50 - 80% of a width of the second connecting portion.

In an embodiment of the first aspect of the present application, during the manufacture of the battery unit, the current collecting plate is bent once at the narrow portion.

In a second aspect of the present application, a battery unit is provided, comprising:
a cylindrical housing, the cylindrical housing comprising a first end and a second end that is opposite the first end, wherein the second end is closed;
an electrode assembly, the electrode assembly being positioned in the housing between the first end and the second end, and the electrode assembly comprising a positive electrode, a negative electrode and a separator between the positive electrode and the negative electrode; and
the current collecting plate for a positive electrode of a battery unit according to the first aspect, the current collecting plate being electrically connected between the electrode assembly and the first end.

In an embodiment of the second aspect of the present application, the negative electrode, the positive electrode and the separator are rolled into concentric layers around a central hole, and the second connecting portion of the current collecting plate is coaxial with the central hole.

In an embodiment of the second aspect of the present application, the current collecting plate is bent once at the narrow portion, and a welding region between the second connecting portion and the first end is coaxial with the central hole.

In an embodiment of the second aspect of the present application, the welding region is located on an outer periphery of the second connecting portion, and the welding region is larger than the central hole in diameter.

In embodiments of the present application, a current collecting plate and a battery unit comprising the current collecting plate according to the present invention can effectively mitigate the problem of poor welding caused by the current collecting plate, and thus improve the reliability of the battery unit.

### Brief description of the drawings

Objectives and features of the present invention will become apparent from the following detailed description considered in conjunction with the accompanying drawings. However, it should be understood that the drawings are designed for illustration only, and are not intended to limit the present invention.
Fig. 1 is an exploded 3D drawing of a battery unit according to an embodiment of the present invention.
Fig. 2 is a planar view of a positive electrode, a negative electrode and a separator comprised in the battery unit of Fig. 1 according to an embodiment of the present invention.
Fig. 3 is a schematic cutaway 3D drawing of a portion of the battery unit of Fig. 1 according to an embodiment of the present invention.
Fig. 4 is a planar view of a current collecting plate according to another embodiment of the present invention, this current collecting plate being applicable to the battery unit of Fig. 1, wherein this current collecting plate is in an unformed state.
Fig. 5 is a sectional perspective view of a battery unit according to another embodiment of the present invention, and shows the current collecting plate of Fig. 4 after being formed and positioned in the battery unit.
Fig. 6 is a perspective view of a portion of a battery unit according to another embodiment of the present invention, and shows the current collecting plate in Fig. 4 welded to a first terminal during an assembly process.

### Detailed description of embodiments

The technical solutions of the present invention are described clearly and completely below with reference to the drawings; obviously, the described embodiments are some rather than all of the embodiments of the present invention. All other embodiments obtained by those of ordinary skill in the art based on the embodiments in the present invention without creative effort shall fall within the scope of protection of the present invention.

It should be noted that when an element is referred to as being "fixed to" or "arranged at" another element, it may be directly or indirectly on the other element. When an element is referred to as being "connected to" another element, it may be directly or indirectly connected to the other element.

It should be understood that the orientations or positional relationships indicated by the terms "length", "width", "upper", "lower", "front", "rear", "left", "right", "vertical", "horizontal", "top", "bottom", "inner", "outer", etc. are based on the orientations or positional relationships shown in the drawings, and are only for the convenience of describing the present application and simplifying the description, rather than indicating or implying that the device or element referred to must have a specific orientation or be constructed and operated in a specific orientation, and therefore cannot be construed as limiting the present application. In addition, the terms "first" and "second" are used for descriptive purposes only, and cannot be construed as indicating or implying relative importance or implicitly indicating the number of technical features indicated. Thus, features defined with "first" and "second" may explicitly or implicitly include one or more of the feature. In the description of the present application, "a plurality of" means two or more, unless explicitly and specifically defined otherwise.

The various specific technical features and embodiments described in this section may be combined in any suitable manner unless there is a contradiction. For example, different implementations may be formed by combining different specific technical features/embodiments/implementations. In order to avoid unnecessary repetition, the various possible combinations of the specific technical features/embodiments/implementations in the present application will not be described separately.

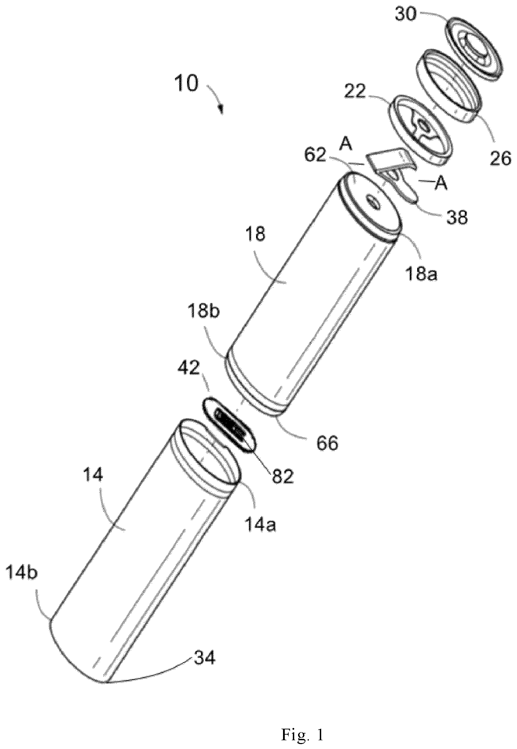

Fig. 1 shows a battery unit 10 according to some embodiments. The battery unit 10 comprises a housing 14, an electrode assembly 18 that is located inside the housing 14, a first insulating member 22 and a second insulating member 26. The battery unit 10 further comprises a first terminal 30 located at a first end 14a of the housing 14, a second terminal 34 located at a second end 14b of the housing 14, a first conductor 38 located in the housing 14 between the electrode assembly 18 and the first terminal 30, and a second conductor 42 located in the housing 14 between the electrode assembly 18 and the second terminal 34. In the embodiment shown, the first conductor 38 is a formable (for example, bendable, ductile, operable, etc.) current collecting plate, collector plate and/or analog that is configured to electrically connect the electrode assembly 18 to the first terminal 30. In an embodiment of the present invention, the first conductor 38 is a positive electrode current collecting plate. Similarly, the second conductor 42 is a formable (for example, ductile, operable, etc.) current collecting plate, collector plate and/or analog that is configured to electrically connect the electrode assembly 18 to the second terminal 34. In an embodiment of the present invention, the second conductor 42 is a negative electrode current collecting plate.

In some embodiments, the electrode unit 10 may have a nominal voltage of between about 1 V and about 5 V, and a nominal capacity of between about 1 Ah and about 5 Ah or greater (such as up to about 9 Ah). Any rechargeable chemical type may be used for the electrode unit 10, such as lithium ("Li"), lithium-ion ("Li-ion"), other lithium-based chemistries, nickel-cadmium ("NiCd"), nickel-metal hydride ("NiMH"), etc.

As shown in Fig. 1, the housing 14 generally provides a shell for the electrical elements (for example, the electrode assembly 18, the first terminal 30, the first conductor 38, the second conductor 42, etc.) of the battery unit 10. In some embodiments, some or all of the electrical elements are located within the housing 14. In the embodiment shown, the housing 14 is made of an insulating material such as plastic or other non-conductive material. In some embodiments, the housing 14 may be made of a conductive material such as steel, aluminum or other conductive metal. In some embodiments, the second end 14b is closed, and the housing 14 is used as a negative electrode terminal to facilitate the external connection of the battery unit 10; for example, the second terminal 34 can be integrated into the housing 14 at the second end 14b to form an integral cylindrical can with an opening at one end. In one or more embodiments, an upper part of the cylindrical can may be open during the assembly process of the secondary battery. Therefore, during the assembly process of the secondary battery, the electrode assembly 18 and the positive electrode current collecting plate 38 and the negative electrode current collecting plate 42, etc., can first be electrically connected together and then inserted into the cylindrical can through the open upper part.

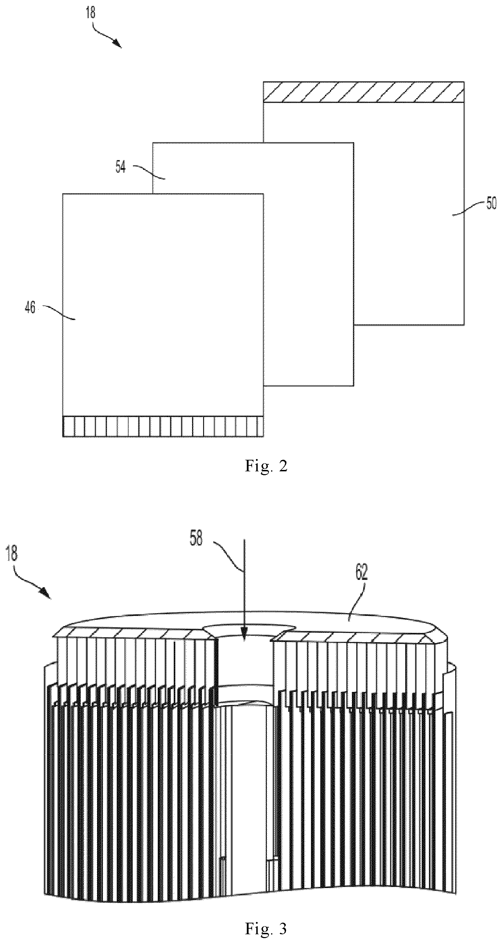

Now referring to Fig. 2, and briefly referring to Fig. 3, the electrode assembly 18 comprises a positive electrode 46, a negative electrode 50, and one or more separators 54 located between the positive electrode 46 and negative electrode 50. In the embodiment shown, the positive electrode 46 comprises a positive electrode plate, the negative electrode 50 comprises a negative electrode plate, and the separator 54 comprises a membrane or isolating sheet. As shown in Fig. 3, this positive electrode 46, negative electrode 50 and isolating member 54 can be rolled into concentric layers around a central hole 58 of the electrode assembly 18 to form a jelly roll. In some embodiments, the electrode assembly 18 is wound around a central pin, which may be removed after the winding operation is complete to form the central hole 58.

Again referring to Fig. 1 and continuing to refer to Fig. 3, once wound, a first end 18a and a second end 18b of the electrode assembly 18 may comprise exposed or uncoated portions of the positive electrode 46 and negative electrode 50. An exposed portion at the first end 18a can be rubbed flat into a flat rough surface to form a first flattened portion 62, and an exposed portion at the second end 18b can be rubbed flat into a flat rough surface to form a second flattened portion 66. In some embodiments not shown, the first flattened portion 62 is a negative electrode flattened portion, and the second flattened portion 66 is a positive electrode flattened portion. The first flattened portion 62 provides an abutting surface for the first conductor 38, such that the first conductor 38 may be connected (for example, welded, fixed, adhered, fastened, etc.) to the electrode assembly 18. Similarly, the second flattened portion 66 provides a connection for the second conductor 42, as discussed in more detail below. Therefore, the first conductor 38 can be constructed to electrically connect the first flattened portion 62 to the first end 14a of the housing 14. The second conductor 42 can be constructed to electrically connect the second flattened portion 66 to the second end 14b of the housing 14.

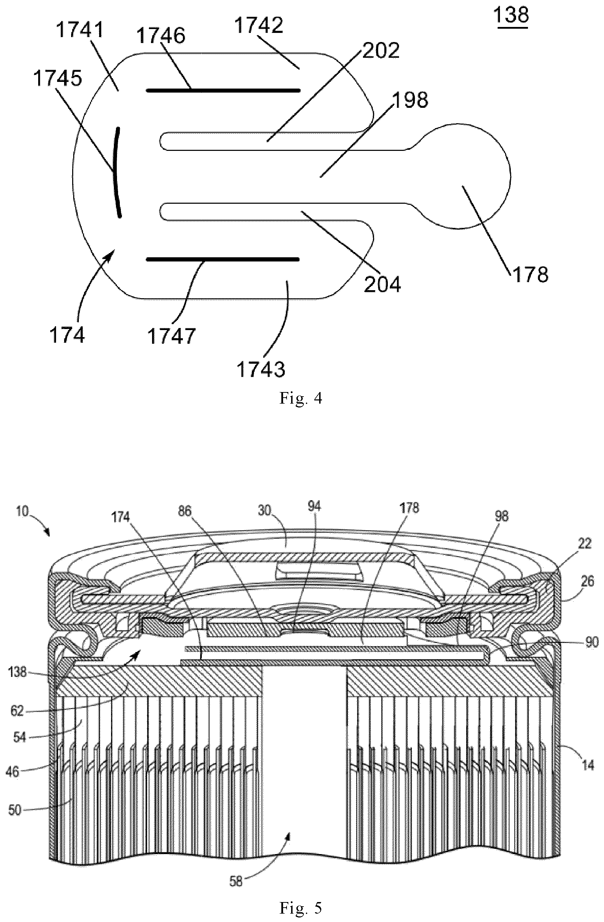

With reference to Fig. 5, in some embodiments, the first insulating member 22 is made of plastic and/or rubber. The first insulating member 22 may be provided with a through hole which allows the first conductor 38 to extend through the first insulating member 22 and make electrical contact with the first terminal 30. The first flattened portion 62 can be arranged or placed in the first insulating member 22 to prevent contact between the first flattened portion 62 and the housing 14. The first terminal 30 can be arranged in the second insulating member 26 which is supported on the first insulating member 22. In some embodiments, once the electrode assembly 18 and other electrical elements are arranged in the housing 14, the first insulating member 22 and the second insulating member 26 are crimped on the first terminal 30.

Still referring to Fig. 1, the first terminal 30 and the second terminal 34 may provide electrical contact with an external device, so as to provide power from the electrode assembly 18 to the external device. In some embodiments, the first terminal 30 and the second terminal 34 may receive power from an external device to recharge the electrode assembly 18. In some embodiments, the first terminal 30 is a positive terminal that is electrically connected to a positive electrode plate (for example, the positive electrode 46) within the electrode assembly 18, and the second terminal 34 is a negative terminal that is connected to a negative electrode plate (for example, the negative electrode 50). For example, the first terminal 30 may connect the positive electrode 46 of the electrode assembly 18 to a positive electrode terminal of an external apparatus that is powered by the battery unit 10. In some embodiments, the first terminal 30 is made of metal, for example stainless steel.

In some embodiments of the present invention, the first conductor 38 is a positive electrode current collecting plate for example.

In an embodiment of the present invention, the second conductor 42 may comprise a connecting portion 82 in the form of a welded plate, which is connected to a second friction portion 66 to electrically connect the second terminal 34 and the second end 18b of the electrode assembly 18. Similar to the first conductor 38, the second conductor 42 may be formed from aluminum, nickel, copper and/or another conductive material.

Still referring to Fig. 5, the first conductor 38 further comprises a hole 86 that is coaxially arranged with a central hole 58 of the electrode assembly 18, and a narrow portion 198 that is located between a first connecting portion 174 and a second connecting portion 178. The first connecting portion 174 and the second connecting portion 178 may have a first dimension that defines a first rated current, and the narrow portion 198 may have a second dimension that defines a second rated current. The second dimension may be smaller than the first dimension, and the second rated current may be smaller than the first rated current. In an embodiment of the present invention, a width of the narrow portion 198 is 50 - 80% of a width of the second connecting portion 178. In an embodiment of the present invention, the first connecting portion 174 is used for being welded to a positive electrode of the battery unit 10.

In an embodiment of the present invention, the narrow portion 198 extends through a virtual center of the main body portion; an advantage of such a design is that it is not necessary to provide a central hole: after being folded upward, the narrow portion can expose a central hole of a rolled core, and electrolyte may be directly injected.

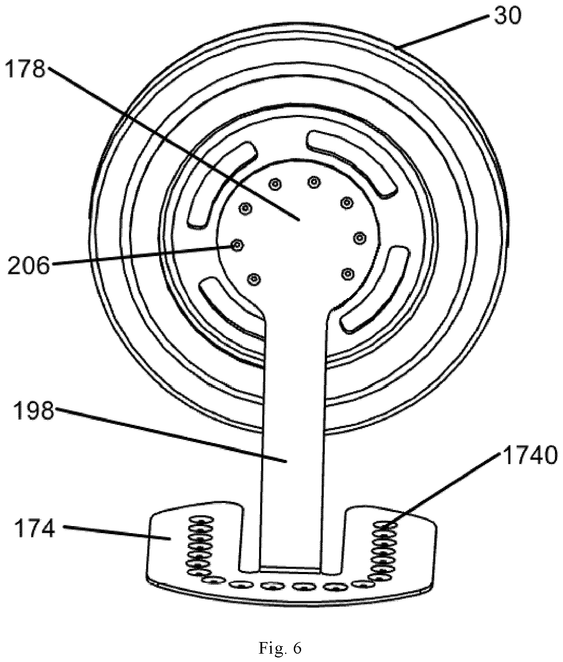

Fig. 4 is a 3D drawing of a current collecting plate 138 that can be used together with the battery unit of Fig. 1 according to an embodiment of the present invention. In an embodiment of the present invention, the first conductor or current collecting plate 138 is an integral member that is obtained by stamping a thin metal plate. For example, the first conductor or current collecting plate 138 is formed to be approximately in the shape of the letter "E", and comprises a vertical extension portion and transverse extension portions that extend transversely in the same direction from the vertical extension portion; a middle transverse extension portion is longer than upper and lower transverse extension portions. As shown in Fig. 4, the first conductor 138 comprises a first connecting portion 174 acting as a main body portion; in an embodiment of the present invention, the first connecting portion 174 is all the portions of the E shape apart from the middle transverse extension portion. That is, the first connecting portion 174 comprises a vertical extension portion 1741, and an upper transverse extension portion 1742 and a lower transverse extension portion 1743 that extend transversely from the vertical extension portion 1741. In addition, the first conductor 138 further comprises a middle transverse extension portion or transverse extension handle. In an embodiment of the present invention, the first connecting portion 174 is welded at a welding region 1740 (see Fig. 6) to a first friction portion 62 by means of laser welding, spot welding, ultrasonic welding, etc. In an embodiment of the present invention, the transverse extension handle comprises a second connecting portion 178 and a narrow portion 198 that connects the second connecting portion 178 to the first connecting portion 174. The second connecting portion 178 is constructed to be electrically connected to a first terminal 30 by means of laser welding, spot welding, ultrasonic welding, etc. In an embodiment of the present invention, the narrow portion 198 is narrower than the second connecting portion 178, so that the narrow portion 198 provides a current flow restricting component (such as a fusible device).

Therefore, the narrow portion 198 may be formed as an overcurrent protection apparatus that is integrally formed with a first conductor 138, for example being a fuse wire, such that, in response to a current exceeding a predetermined value, the narrow portion 98 can interrupt the current between a first friction portion 62 and a first terminal 30. For example, when the current exceeds the predetermined value (for example, the rated current of the material that forms the narrow portion 198), the narrow portion 198 of the first conductor 138 may melt. In an example, the predetermined value may be 120% of a nominal value of a rated current of a battery unit. However, values may also be considered that are greater than or less than 120% of the rated value.

Referring now to Fig. 5, the first connecting portion 174 and the second connecting portion 178 may be folded, so as to form the first conductor 138 into a flat U shape as shown in Fig. 5. For example, Fig. 5 shows a perspective view of the first conductor 138, wherein the first conductor 138 is in a formed state.

During an overcurrent incident (for example, when a current exceeds a predetermined value), as the current increases, the narrow portion 198 and the first connecting portion 174 and the second connecting portion 178 become hot. The first connecting portion 174 and the second connecting portion 178 are rated to reach a higher heat than the narrow portion 198, such that the narrow portion 198 provides a current flow restricting component (such as a fusible device). That is, the maximum current flowing through the first conductor 138 is equal to the maximum current flowing through the narrow portion 198. As soon as the current exceeds the maximum current of the narrow portion 198, the narrow portion 198 melts or is separated by an air gap from a remaining portion of the first conductor 138 by another means, and interrupts the current between the first friction portion 62 and the first terminal 30; in other words, the first connecting portion 174 and the second connecting portion 178 of the first conductor 138 have a first dimension that defines a first rated current, and the narrow portion 198 of the first conductor 138 has a second dimension that defines a second rated current, such that the second dimension is smaller than the first dimension, and the second rated current is smaller than the first rated current.

Referring to Fig. 4, a welding portion is further comprised on the first conductor or current collecting plate 138, for being welded to the first friction portion 62, as shown in Fig. 1. In an embodiment of the present invention, a first welding portion 1745 is provided on the vertical extension portion 1741, for example as shown schematically in Fig. 4. In an embodiment of the present invention, a second welding portion 1745 is provided on the upper transverse extension portion 1742, for example as shown schematically in Fig. 4. In an embodiment of the present invention, a third welding portion 1747 is provided on the lower transverse extension portion 1743, for example as shown schematically in Fig. 4. The first welding portion 1745 and/or the second welding portion 1745 and/or the third welding portion 1747 help with welding to the first friction portion 62.

Still referring to Fig. 4, a groove 202 is formed between the upper transverse extension portion 1742 and the narrow portion 198, for releasing stress produced during welding. In another embodiment of the present invention, a groove 204 is formed between the lower transverse extension portion 1743 and the narrow portion 198, for releasing stress produced during welding. Since the first connecting portion 174 and the second connecting portion 178 are separated from each other by the grooves 202 and 204, the release of stress during welding to a cap or first terminal 30, for example, is improved, avoiding phenomena such as weak welds and over-welding caused by pressure imbalance.

Fig. 5 is a sectional perspective view of a battery unit 10 according to another embodiment of the present invention, and shows the current collecting plate 138 of Fig. 4 after being formed and positioned in the battery unit 10. Fig. 6 is a perspective view of a portion of a battery unit 10 according to another embodiment of the present invention, and shows the current collecting plate 138 in Fig. 4 welded to a first terminal 30 during an assembly process. In an embodiment of the present invention, for example referring to Fig. 4, the second connecting portion 178 is formed to be approximately in the shape of a circle. That is, for example as shown in Fig. 6, a welding region 206 between the second connecting portion 178 and the first end 30 is coaxial with a central hole 58 of an electrode assembly 18. In an embodiment of the present invention, the welding region is located on an outer periphery of the second connecting portion 178, and the welding region 206 is larger than the central hole 58 of the electrode assembly 18 in diameter.

Referring to Fig. 6, the second connecting portion 178 is welded at the outer periphery to the first terminal 30 or cap, so as to avoid welding at the outer periphery of the current collecting plate 138, because such welding is prone to being off-center as well as sparking. In the present invention, by forming the second connecting portion 178 as a circular weld, the weld is more reliable, and an electrical connection between the current collecting plate 138 and the first terminal 30 is more robust.

In addition, compared to an S-shaped structure or twice-bent structure of a current collecting plate, the current collecting plate 138 according to the present invention is bent once, which saves on space in a cell, for example affording a height reduction of about 0.3 mm, thereby further helping to increase the capacity of the cell. In addition, the current collecting plate 138 according to the present invention being bent once can better ensure the safety of the battery, because with bending twice, for example, after one of the bends is severed due to melting through, for example, the other bend, for example, forms an elastic arm having elasticity, and when released, the elastic arm is likely to cause the cell to again electrically connect to the cap or first terminal 30, thereby creating possible potential danger and a safety hazard.

Although the description herein is based on embodiments, it is by no means the case that each embodiment comprises only one independent technical solution. This manner of presentation is adopted herein purely for the sake of clarity. Those skilled in the art should consider the specification in its entirety; the technical solutions in different embodiments may also be suitably combined to form other embodiments understandable to those skilled in the art. The scope of the present invention is defined by the attached claims, rather than by the above description. Thus, it is intended that all modifications falling within the meaning and scope of equivalent key elements of the claims shall be included in the present invention.

To a person skilled in the art, the present invention is not limited to the details of the demonstrative embodiments above, and may be implemented in other specific forms without deviating from the spirit or basic features of the present invention. Therefore, the above embodiments should be regarded as demonstrative and non-limiting.

## Claims

1. Current collecting plate for a positive electrode of a battery unit, **characterized in that** the current collecting plate comprises:
a first connecting portion, the first connecting portion being formed as a main body portion of the current collecting plate, and the first connecting portion being used for being welded to a positive electrode of a battery unit;
a second connecting portion that is arranged in the middle of the main body portion; and
a narrow portion that connects the first connecting portion and the second connecting portion, the narrow portion extending through a virtual center of the main body portion, and, during the manufacture of the battery unit, the current collecting plate being folded at the narrow portion, wherein the first connecting portion and the second connecting portion respectively have a first dimension that defines a first rated current, and the narrow portion has a second dimension that defines a second rated current which is smaller than the first rated current, and the second dimension is smaller than the first dimension.

2. Current collecting plate according to Claim 1, wherein the current collecting plate is an integral member that is obtained by stamping a metal plate.

3. Current collecting plate according to Claim 1 or 2, wherein the first connecting portion is constructed to be electrically connected to an electrode assembly of the battery unit, and the second connecting portion is constructed to be electrically connected to a cap of the battery unit.

4. Current collecting plate according to Claim 1 or 2, wherein the current collecting plate is formed to be approximately in the shape of the letter "E", and comprises a vertical extension portion, and an upper transverse extension portion, a middle transverse extension portion and a lower transverse extension portion that extend transversely in the same direction from the vertical extension portion, and the middle transverse extension portion is longer than the upper transverse extension portion and the lower transverse extension portion.

5. Current collecting plate according to Claim 4, wherein the vertical extension portion and the upper transverse extension portion and the lower transverse extension portion are formed as the first connecting portion, and the middle transverse extension portion is formed as the second connecting portion and the narrow portion.

6. Current collecting plate according to Claim 5, wherein the middle transverse extension portion is formed as a transverse extension handle, and the narrow portion is narrower than the second connecting portion.

7. Current collecting plate according to Claim 6, wherein the second connecting portion is formed to be approximately in the shape of a circle, and the second connecting portion is constructed to be welded at an outer periphery to a cap or a first terminal of the battery unit.

8. Current collecting plate according to Claim 7, wherein a groove is formed between the upper transverse extension portion and the narrow portion, and a groove is formed between the lower transverse extension portion and the narrow portion.

9. Current collecting plate according to Claim 6, wherein a width of the narrow portion is 50 - 80% of a width of the second connecting portion.

10. Current collecting plate according to any one of Claims 1 - 9, wherein during the manufacture of the battery unit, the current collecting plate is bent once at the narrow portion.

11. Battery unit, comprising:
a cylindrical housing, the cylindrical housing comprising a first end and a second end that is opposite the first end, wherein the second end is closed;
an electrode assembly, the electrode assembly being positioned in the housing between the first end and the second end, and the electrode assembly comprising a positive electrode, a negative electrode and a separator between the positive electrode and the negative electrode; and
the current collecting plate for a positive electrode of a battery unit according to any one of Claims 1 - 10, the current collecting plate being electrically connected between the electrode assembly and the first end.

12. Battery unit according to Claim 11, wherein the negative electrode, the positive electrode and the separator are rolled into concentric layers around a central hole, and the second connecting portion of the current collecting plate is coaxial with the central hole.

13. Battery unit according to Claim 11 or 12, wherein the current collecting plate is bent once at the narrow portion, and a welding region between the second connecting portion and the first end is coaxial with the central hole.

14. Battery unit according to Claim 13, wherein the welding region is located on an outer periphery of the second connecting portion, and the welding region is larger than the central hole in diameter.
